# EUROPÄISCHE PATENTSCHRIFT

(11) **EP 0 559 613 B1**
(45) Veröffentlichungstag und Bekanntmachung des Hinweises auf die Patenterteilung: **15.12.1999**
(21) Anmeldenummer: 93810127.6
(22) Anmeldetag: 24.02.1993
(51) Int. Cl.: C08K 5/3435, C09B 67/20, C09B 67/00, C08K 5/3445, C08K 5/3492, C08K 5/42

(54) **Stabilisierung von organischen Pigmenten**
Stabilization of organic pigments
Stabilisation de pigments organiques

(30) Priorität: 05.03.1992 CH 69392
(43) Veröffentlichungstag der Anmeldung: 08.09.1993
(73) Patentinhaber: Ciba Specialty Chemicals Holding Inc., 4057 Basel (CH)
(72) Erfinder: Chassot, Laurent, Dr., CH-1724 Praroman (CH)

(56) Entgegenhaltungen:
- EP-A- 0 241 419
- EP-A- 0 284 800
- FR-A- 2 252 372
- PATENT ABSTRACTS OF JAPAN vol. 14, no. 305 (M-992)(4248) 29. Juni 1990 & JP-A-2 099323 ( MITSUBISHI KASEI CORP. ) 11. April 1990

## Beschreibung

Die vorliegende Erfindung betrifft die Stabilisierung von organischen Pigmenten gegen den Einfluss von Licht und Wetter durch Zusatz von Nitroxylverbindungen.

Es ist bekannt, dass nicht alle organischen Pigmente immer sehr gute Licht- und Wetterechtheit zeigen. Einige davon haben sich allerdings als hochwertige Pigmente bewährt. Obwohl sie bereits eine sehr gute Licht- und Wetterbeständigkeit zeigen, ist nun gefunden worden, dass diese überraschenderweise noch verbessert werden können, insbesondere bei transparenten Pigmentformen, wenn die Pigmente mit einer Nitroxylverbindung vermischt werden.

Nitroxylverbindungen sind aus verschiedenen Publikationen als Stabilisatoren bekannt. In JP-A 75-58141 werden unter vielen anderen HALS (Hindered Amine Light Stabiliser) auch Nitroxylverbindungen beschrieben, die zusammen mit UV-Absorbern zur Stabilisierung von pigmentierten Kunststoffen gegen den Einfluss von Licht dienen. Es wird ausgeführt, dass die Wirkung der UV-Absorber als Lichtstabilisatoren für den Kunststoff durch die Pigmente beeinträchtigt wird, dass aber diese Beeinträchtigung durch einen HALS vermindert werden kann. Bevorzugt werden HALS, die keine Nitroxylgruppe enthalten. Aus EP-A 309 401 ist der Einsatz von N-hydroxy-HALS zur Verhinderung von Mangelhaftigkeiten, wie Brüchigwerden, Rissbildung, Korrosion, Erosion, Glanzverlust, Kreidung und Vergilbung, bekannt. In US-Patent 3 970 632 wird eine Polymermasse enthaltend ein Chinophthalonpigment, welche dank Zugabe von HALS eine hohe Lichtbeständigkeit und Verblassungsfestigkeit aufweist, beschrieben. Obwohl ganz generisch auch Nitroxylverbindungen mit umfasst werden, sind spezifisch nur nitroxylgruppenfreie HALS aufgeführt. Aus JP-A 82-119941 sind pigmentierte Polymere enthaltend einen UV-Absorber und einen HALS (ohne Hinweis auf Nitroxylverbindungen) zur Vorbeugung von Verblassung bekannt. In JP-A 90-99323 werden gegen die Verblassung durch die Einwirkung von Licht stabilisierte Laminate beschrieben, die in einer Zwischenschicht einen in einem organischen Lösungsmittel löslichen Farbstoff (irrtümlicherweise als Pigment bezeichnet) enthalten, der in gelöster Form mit einer Nitroxylverbindung behandelt wurde.

Aus diesen Publikationen ergibt sich für den Fachmann die Lehre, dass bei mit löslichen Farbstoffen gefärbten Kunststoffen unter bestimmten Bedingungen, z.B. in Zwischenschichten von Laminaten, bei Behandlung der gelösten Farbstoffe mit einer Nitroxylverbindung, die Verblassung durch Einwirkung von Licht vermindert werden kann, dass der gleiche Effekt aber bei mit Pigmenten pigmentierten Kunststoffen, zusammen mit der Stabilisierung des Kunststoffes, durch Beimischung eines nitroxylgruppenfreien HALS erzielt wird.

Es ist nun gefunden worden, dass sogar die bereits hohe Licht- und Wetterbeständigkeit gewisser Pigmente ganz überraschend durch Vermischung beziehungsweise Beschichtung der Pigmentpartikel mit bestimmten Nitroxylverbindungen noch verbessert werden kann.

Die vorliegende Erfindung betrifft demnach lichtstabilisierte Pigmentzusammensetzungen bestehend aus
a) mindestens einem organischen Pigment ausgewählt aus der Gruppe bestehend aus Azopigmente, Chinacridone, Phthalocyanine, Indanthrone, Flavanthrone, Pyranthrone, Anthrachinone, Perylene, Dioxazine, Perinone, Thioindigo, Isoindoline, Isoindolinone und Metallkomplexe und
b) 1 bis 100 Gew.%, bezogen auf das Pigment, einer Nitroxylverbindung der Formel 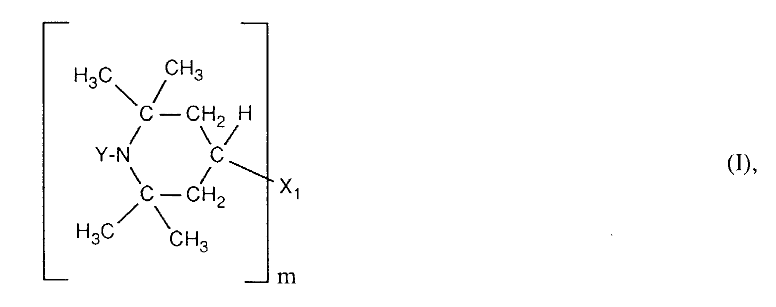 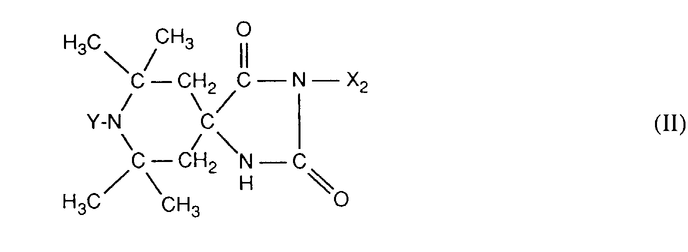 oder 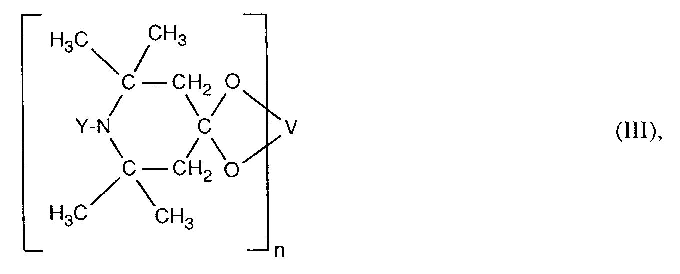 worin
   m 1, 2 oder 3 ist,
   X₁, bei m = 1, C₁-C₁₈-Alkyl, -OCO-R₇, -NR₆-COR₇ oder 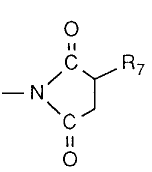 ist, worin R₆ Wasserstoff oder C₁-C₁₈-Alkyl ist und R₇ C₁-C₁₈-Alkyl oder unsubstituiertes oder durch C₁-C₄-Alkyl, C₁-C₄-Alkoxy, Phenyl oder Halogen substituiertes Phenyl oder Naphthyl bedeutet,
      bei m = 2, eine Gruppe -OCO-(CH₂)ₚ-OCO- oder -NR₆CO-(CH₂)ₚ-CONR₁₅-, worin p eine Zahl zwischen 2 und 8 ist, 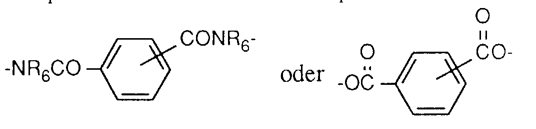 ist und
   bei m = 3, eine Gruppe 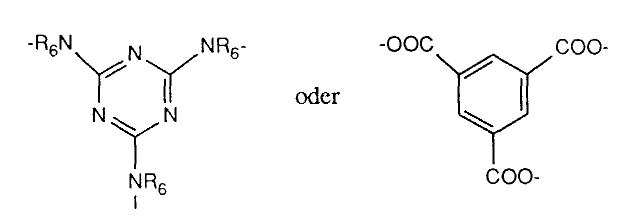
   bedeutet,
   X₂ C₁-C₁₈-Alkyl ist,
   n die Zahl 2,
   V die Gruppe (-CH₂)₂C(CH₂-)₂ oder 〉O〈 bedeutet und
   Y O• ist,
oder eines Säureadditionssalzes davon.

Besonders geeignete Pigmente sind jene der Isoindolin-, Isoindolinon-, Metallkomplex-, Monoazo- und insbesondere der Bisazo-, Chinacridon-, Phthalocyanin-, Anthrachinon- und Perylenreihe. Es handelt sich dabei um allgemein bekannte und zum Teil im Handel erhältliche Produkte. Bevorzugt werden die Pigmente in feiner, d.h. in transparenter Form, mit einer durchschnittlichen Partikelgrösse von 0,005 bis 0,1 µm, bevorzugt von 0,01 bis 0,07 µm, verwendet.

Nitroxylverbindungen sind allgemein bekannte Verbindungen. Sie werden z.B. in folgenden Publikationen offenbart:
- Chemical Reviews, 1978, Vol. 78, No. 1, 37-64. (J.F.W. Keana, Newer Aspects of the Synthesis and Chemistry of Nitroxide Spin Labels), insbesondere die Seiten 40-47;
- Imidazoline Nitroxides, 1988, Vol. 1, 5-23 (L.B. Volodarsky, I.A. Grigorev, Synthesis of Heterocyclic Nitroxides);
- Tetrahedron Letters, Vol. 29, No. 37, 4677-4680, 1988 (R.W. Murray, M. Singh, A Convenient High Yield Synthesis of Nitroxides);
- J. Org. Chem, 1991, Vol. 56, 6110-6114 (Z. Ma, J.M.Bobbitt, Organic Oxoammonium Salts), insbesondere die Beispiele auf Seite 6114;
- Journal of Polymer Science (Polymer Chemistiry Edition), 1974, Vol. 12, 1407-1420 (T. Kurosaki et al., Polymers Having Stable Radicals), insbesondere die Beispiele S.S. 1417-1419;
- US-Patent 3 536 722, Formel I und insbesondere die Beispiele 1-6;
- US-Patent 3 936 456, Spalten 1 und 2 und insbesondere die Beispiele 7 und 8;
- US-Patent 3 971 757, Formel I und Beispiel 12;
- US-Patent 3 966 711, Formel I und Beispiel 7;
- US-Patent 4 131 599, Spalte 1 und 2 und Beispiel 5;
- US-Patent 5 001 233, insbesondere Beispiel 1.

Allenfalls neue verwendbare Nitroxylverbindungen der obengenannten Definition können in Analogie zu allgemein bekannten Methoden hergestellt werden.

Die Nitroxylverbindung wird vorzugsweise in einer Menge von 5-100 Gew.%, bezogen auf das Pigment, eingesetzt.

Es können auch anorganische oder organische Salze von Nitroxylverbindungen verwendet werden, die durch Addition von Säuren in maximal den Nitroxylgruppen äquivalenten Mengen entstehen. Solche Säuren können anorganische Säuren, wie z.B. Schwefel-, Salz- oder Phosphorsäure, oder organische Carbonsäuren, wie Ameisen-, Essig-, Oxal-, Malein-, Benzoe- oder Salicylsäure, organische Sulfonsäuren wie Methan- oder p-Toluolsulfonsäure oder organische phosphorhaltige Säuren, wie Benzolphosphonsäure, Methanphosphonsäure oder Benzolphosphinsäure, sein.

Bedeuten etwaige Substituenten C₁-C₄-Alkyl, so handelt es sich z.B. um Methyl, Ethyl, n-Propyl, Isopropyl, n-Butyl, sec.-Butyl, tert.-Butyl, und C₁-C₁₈-Alkyl zusätzlich z.B. n-Amyl, tert.-Amyl, Hexyl, Heptyl, Octyl, 2-Ethylhexyl, Decyl, Dodecyl, Tetradecyl, Hexadecyl oder Octadecyl;

C₁-C₄-Alkoxy bedeutet, z.B. Methoxy, Ethoxy, n-Propoxy, Isopropoxy oder Butyloxy, C₁-C₁₈-Alkoxy zusätzlich z.B. Hexyloxy, Decyloxy, Dodecyloxy, Hexadecyloxy oder Octadecyloxy;

Bevorzugt werden Nitroxylverbindungen der Formel I oder II, worin m 1 ist, X₁ Benzoyloxy oder Naphthoyloxy bedeutet und X₂ C₈-C₁₈-Alkyl ist.

Wie oben bereits erwähnt werden die Pigmente durch die Beimischung einer Nitroxylverbindung gegen die Einwirkung von Licht und Wetter, die sowohl zur Verblassung, gegebenenfalls aber auch zum Nachdunkeln der Ausfärbungen führen kann, stabilisiert. Die erfindungsgemässe Beimischung der Nitroxylverbindung zum Pigment hat sich in beiden Fiillen als wirksam, d.h. als stabilisierend, erwiesen. Ein weiterer Gegenstand der Erfindung ist demnach ein Verfahren zur Licht- und Wetterstabilisierung von Pigmenten, ausgewählt aus der Gruppe bestehend aus Azopigmente, Chinacridone, Phthalocyanine, Indanthrone, Flavanthrone, Pyranthrone, Anthrachinone, Perylene, Dioxazine, Perinone, Thioindigo, Isoindoline, Isoindolinone und Metallkomplexe, durch Vermischung oder Beschichtung der Pigmentpartikel mit 1 bis 100 Gew.%, bezogen auf das Pigment, einer Nitroxylverbindung der Formel 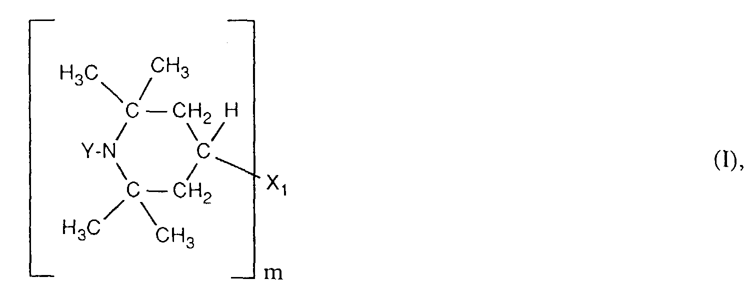 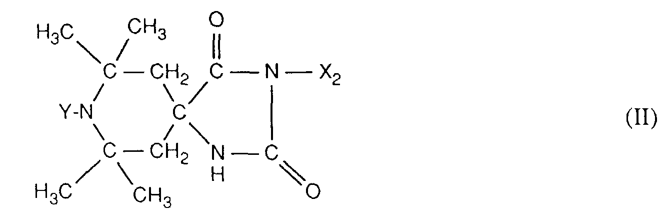 oder 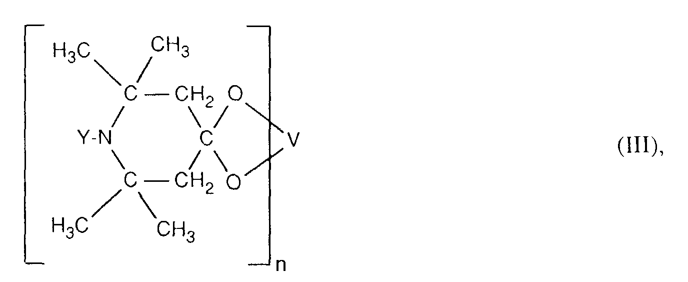 worin
m 1, 2 oder 3 ist,
X₁, bei m = 1, C₁-C₁₈-Alkyl, -OCO-R₇, -NR₆-COR₇ oder 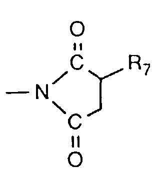 ist, worin R₆ Wasserstoff oder C₁-C₁₈-Alkyl ist und R₇ C₁-C₁₈-Alkyl oder unsubstituiertes oder durch C₁-C₄-Alkyl, C₁-C₄-Alkoxy, Phenyl oder Halogen substituiertes Phenyl oder Naphthyl bedeutet,
bei m = 2, eine Gruppe -OCO-(CH₂)ₚ-OCO- oder -NR₆CO-(CH₂)ₚ-CONR₁₅-, worin p eine Zahl zwischen 2 und 8 ist, 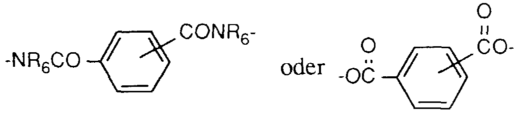 ist und
bei m = 3, eine Gruppe 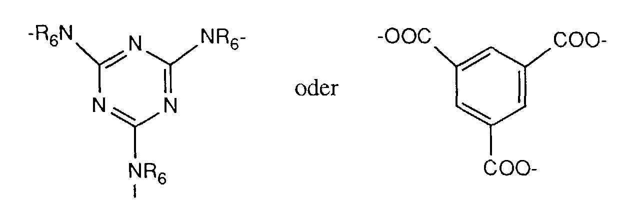 bedeutet,
   X₂ C₁-C₁₈-Alkyl ist,
   n die Zahl 2,
   V die Gruppe (-CH₂)₂C(CH₂-)₂ oder 〉O〈 bedeutet und
   Y O• ist oder eines Säureadditionssalzes davon.

Dies kann nach folgenden verschiedenen Methoden erfolgen:
- Die Nitroxylverbindung wird in der gewünschten Menge in einem organischen Lösungsmittel gelöst. Das Pigment wird nach üblichen Methoden in dieser Lösung suspendiert und die erhaltene Suspension wird gegebenenfalls in einer konventionellen Mühle vermahlen. Das Pigmentgemisch wird durch abdestillieren des Lösungsmittels isoliert und anschliessend getrocknet;
- Die erforderiche Menge Nitroxylverbindung wird, in einem organischen Lösungsmittel gelöst, einer nach üblichen Methoden hergestellten Pigmentsuspension zugegeben und danach, durch Zugabe eines Lösungsmittels, in welchem sie nicht löslich ist, z.B. Wasser, ausgefällt und mitsuspendiert. Die Suspension wird anschliessend filtriert und die Pigmentmischung nach üblichen Methoden isoliert;
- Vorzugsweise werden allerdings das Pigment und die Nitroxylverbindung entweder vorgemischt oder getrennt in der gewünschten Menge in das zu pigmentierende Substrat nach üblichen Methoden eingearbeitet.

Die erfindungsgemässen Pigmentzusammensetzungen eignen sich ausgezeichnet als Pigmente zum Färben von hochmolekularem organischem Material, insbesondere, wenn hohe Anforderungen an die Licht- und Wetterbeständigkeit gestellt werden.

Hochmolekulare organiche Materialien, die mit den erfindungsgemässen Pigmentzusammensetzungen pigmentiert werden können, sind z.B. Celluloseether und -ester, wie Ethylcellulose, Nitrocellulose, Celluloseacetat, Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, ABS, Polyphenylenoxide, Gummi, Casein, Silikon und Silikonharze, einzeln oder in Mischungen.

Besonders geeignet sind die erfindungsgemässen Pigmentzusammensetzungen zum Einfärben von Polyvinylchlorid und Polyolefinen, wie Polyethylen und Polypropylen, sowie zum Pigmentieren von Lacken, Anstrichstoffen und Druckfarben. Dank ihrer hohen Lichtbeständigkeit eignen sie sich aber auch sehr gut für den Einsatz in elektrophotographischen Materialien (z.B. Photozellen), Farbfiltern (z.B. Flüssigkristallanzeigen), Informationsspeicherungsmaterialien ("optical disc"), nicht linearer Optik und in optischen Begrenzern ("optical limiters").

Die erfindungsgemässen Pigmentzusammensetzungen eignen sich aber vorzugsweise zum Färben von wässrigen und/oder lösungsmittelhaltigen Lacken, insbesondere Automobillacken. Ganz besonders bevorzugt ist ihre Verwendung für Effektlackierungen, bei denen transparente organische Pigmente eingesetzt werden.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen Pigmentzusammensetzungen als Toner oder in Form von Präparaten einzusetzen.

Bezogen auf das zu pigmentierende hochmolekulare organische Material kann man die erfindungsgemässen Pigmentzusammmensetzungen in einer Menge von 0,01 bis 40 Gew.%, vorzugsweise von 0,1 bis 20 Gew.%, einsetzen.

Die Pigmentierung der hochmolekularen organischen Substanzen mit den erfindungsgemässen Pigmentzusammensetzungen erfolgt beispielsweise derart, dass man eine solche Pigmentzusammensetzung gegebenenfalls in Form von Masterbatches, oder die einzelnen Komponenten diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzgiessen, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen Pigmentzusammensetzungen in die Polymeren eingearbeitet werden. Zwecks Erzielung verschiedener Farbtöne ist es ferner möglich, den hochmolekularen organischen Stoffen neben den erfindungsgemässen Pigmentzusammensetzungen noch Füllstoffe beziehungsweise andere farbgebende Bestandteile, wie Weiss-, Bunt- oder Schwarzpigmente, in beliebigen Mengen zuzufügen.

Zum Pigmentieren von Lacken, Anstrichstoffen und Druckfarben werden die hochmolekularen organischen Materialien und die erfindungsgemässen Pigmentzusammensetzungen gegebenenfalls zusammen mit Zusatzstoffen, ausgewählt aus Füllmitteln, anderen Pigmenten, Siccativen oder Weichmachern, in einem gemeinsamen organischen Lösungsmittel oder Lösungsmittelgemisch fein dispergiert beziehungsweise gelöst. Man kann dabei so verfahren, dass man die einzelnen Komponenten für sich oder auch mehrere gemeinsam dispergiert beziehungsweise löst, und erst hierauf alle Komponenten zusammenbringt.

In Färbungen, beispielsweise von Lacken, Polyvinylchlorid oder Polyolefinen, zeichnen sich die erfindungsgemässen Pigmentzusammensetzungen durch gute allgemeine Pigmenteigenschaften, wie gute Dispergierbarkeit, hohe Farbstärke und Reinheit, gute Migrations-, Hitze- und insbesondere Licht- und Wetterbeständigkeit aus.

Die nachfolgenden Beispiele erläutern die Erfindung. Darin bedeuten Teile Gewichtsteile, sofern nichts anderes angegeben ist.

### Beispiel 1: 0,9 g eines scharlachroten Bisazopigments (C.I. Pigment Rot 166) der Formel

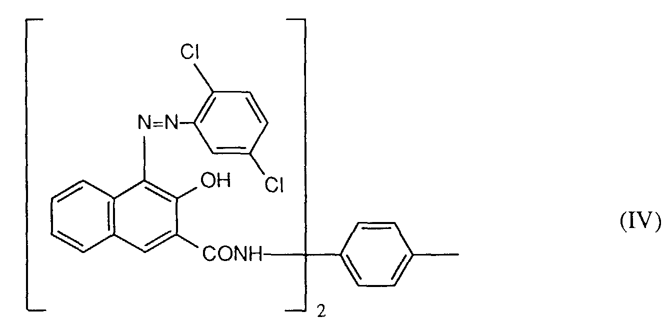

und 0,1 g einer Nitroxylverbindung der Formel 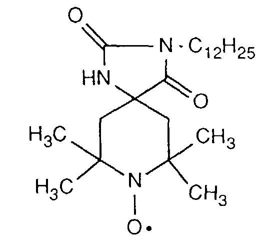 werden in 25 ml Methylenchlorid durch Behandlung mit Ultraschall während 3 Minuten suspendiert. Dann wird das Lösungsmittel abdestilliert und der Rückstand wird getrocknet.

Das erhaltene stabilisierte Pigment wird wie folgt in einen Alkyd-Melamin-Einbrennlack eingearbeitet.

0,4 g Pigment/Nitroxyl-Gemisch, 7,6 g TiO₂, 9 ml Methylisobutylketon und 30 g Einbrennlack bestehend aus 66,5 Teilen Alkydharz ®ALKYDAL F27 (Bayer AG), 24,4 Teilen Melaminharz ®MAPRENAL TTK (Hoechst AG), 2,1 Teilen Xylol, 4,0 Teilen Ethylenglykol und 1,0 Teil Silikonöl (1 %ig in Xylol) werden nach üblichen Methoden vermischt. Der erhaltene Farblack wird auf Aluminiumbleche ausgezogen und 30 Minuten bei 130°C eingebrannt.

Eine Kontroll-Lackausfärbung wird ebenfalls in der gleichen Weise hergestellt, mit der Ausnahme, dass das Pigment ohne Zusatz von Nitroxylverbindung eingesetzt wird.

Die Wetterbeständigkeit der erhaltenen Lackausfärbungen wird gemäss WOM-Test nach DIN 53387 nach 500 Stunden Bewitterung bestimmt. Die mit Zusatz der Nitroxylverbindung erhaltene Ausfärbung zeigt eine deutlich bessere Wetterbeständigkeit, als die Kontroll-Lackausfärbung.

Beispiel 2: Beispiel 1 wird wiederholt mit der einzigen Ausnahme, dass anstelle des Pigments der Formel IV die gleiche Gewichtsmenge des Bisazopigments (C.I. Pigment Gelb 93) der Formel 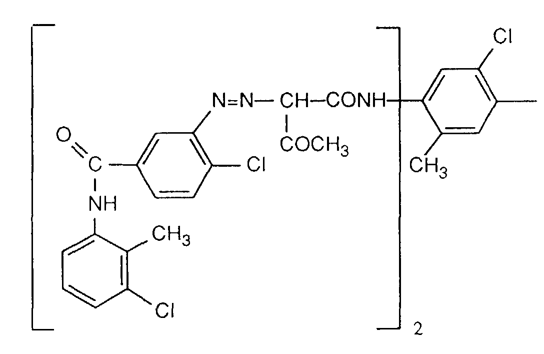 eingesetzt wird. Die Lackausfärbung zeigt eine deutlich bessere Wetterbeständigkeit als die entsprechende Kontroll-Lackausfärbung.

### Beispiele 3-49:

0,4 g eines der in Kolonne I der nachstehenden Tabelle 1 angegebenen Pigmente und 0,08 g einer der in Kolonne II der Tabelle 1 angegebenen Nitroxylverbindungen werden getrennt, aber sonst in der gleichen Weise, in demselben Alkyd-Melamin-Einbrennlack (Weissverschnitt), wie in Beispiel 1 beschrieben, eingearbeitet (Methode B). Die Wetterbeständigkeit der erhaltenen Lackausfärbungen sowie entsprechender Kontroll-Lackausfärbungen ohne Nitroxylverbindung wird wie in Beispiel 1 beschrieben bestimmt. Bei allen aufgeführten Beispielen kann eine bessere Wetterbeständigkeit als bei den entsprechenden Kontroll-Lackausfärbungen nachgewiesen werden.

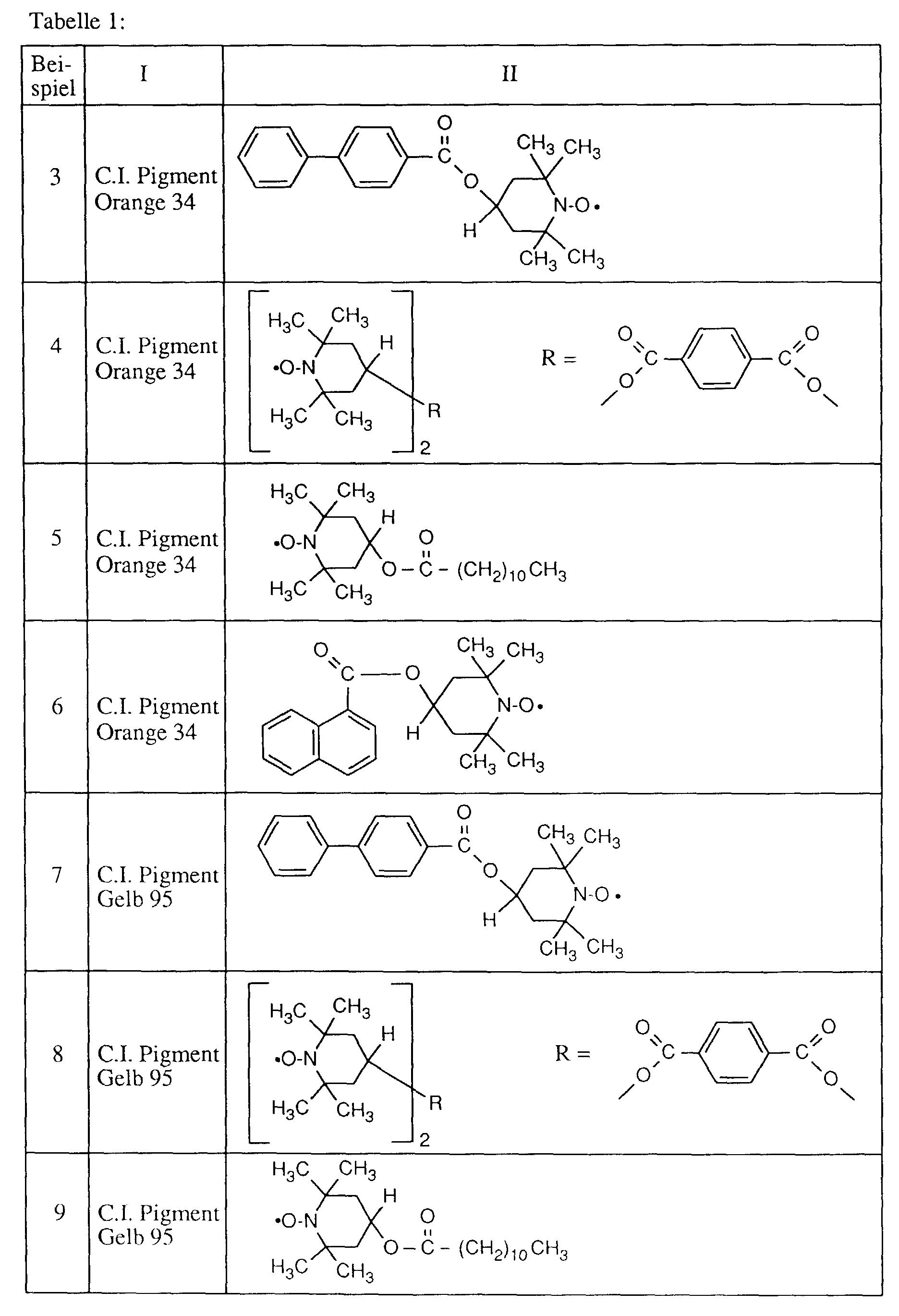

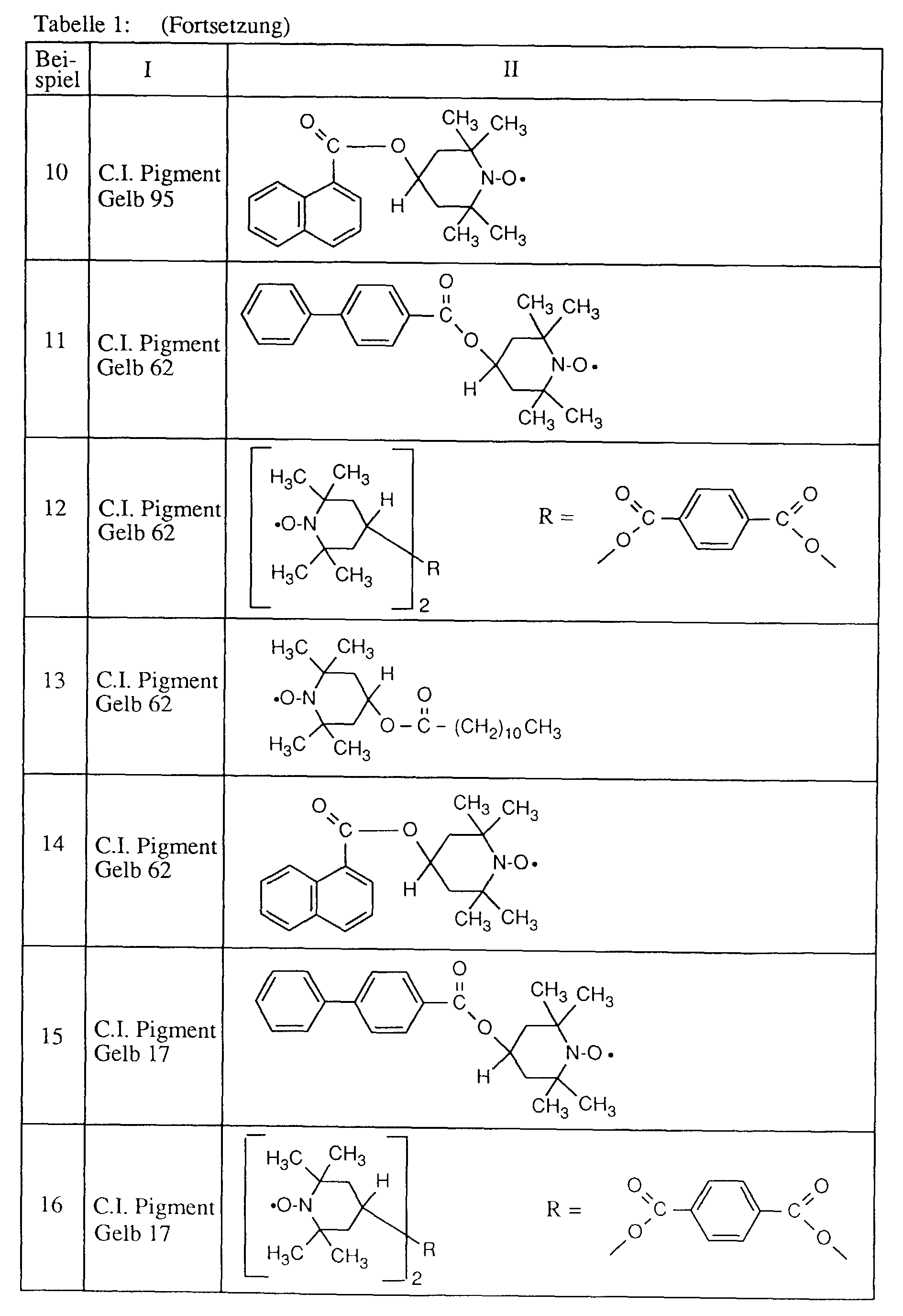

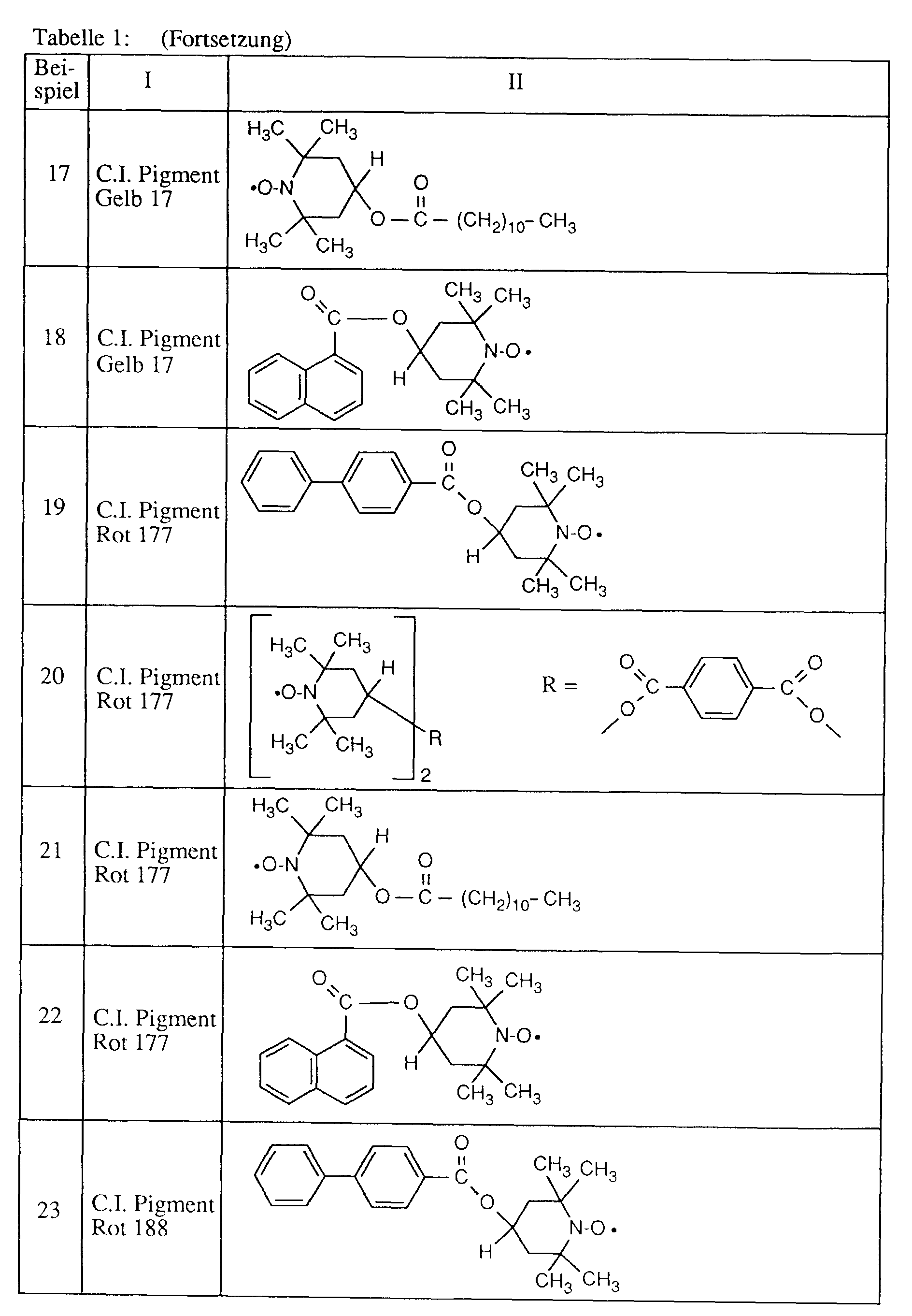

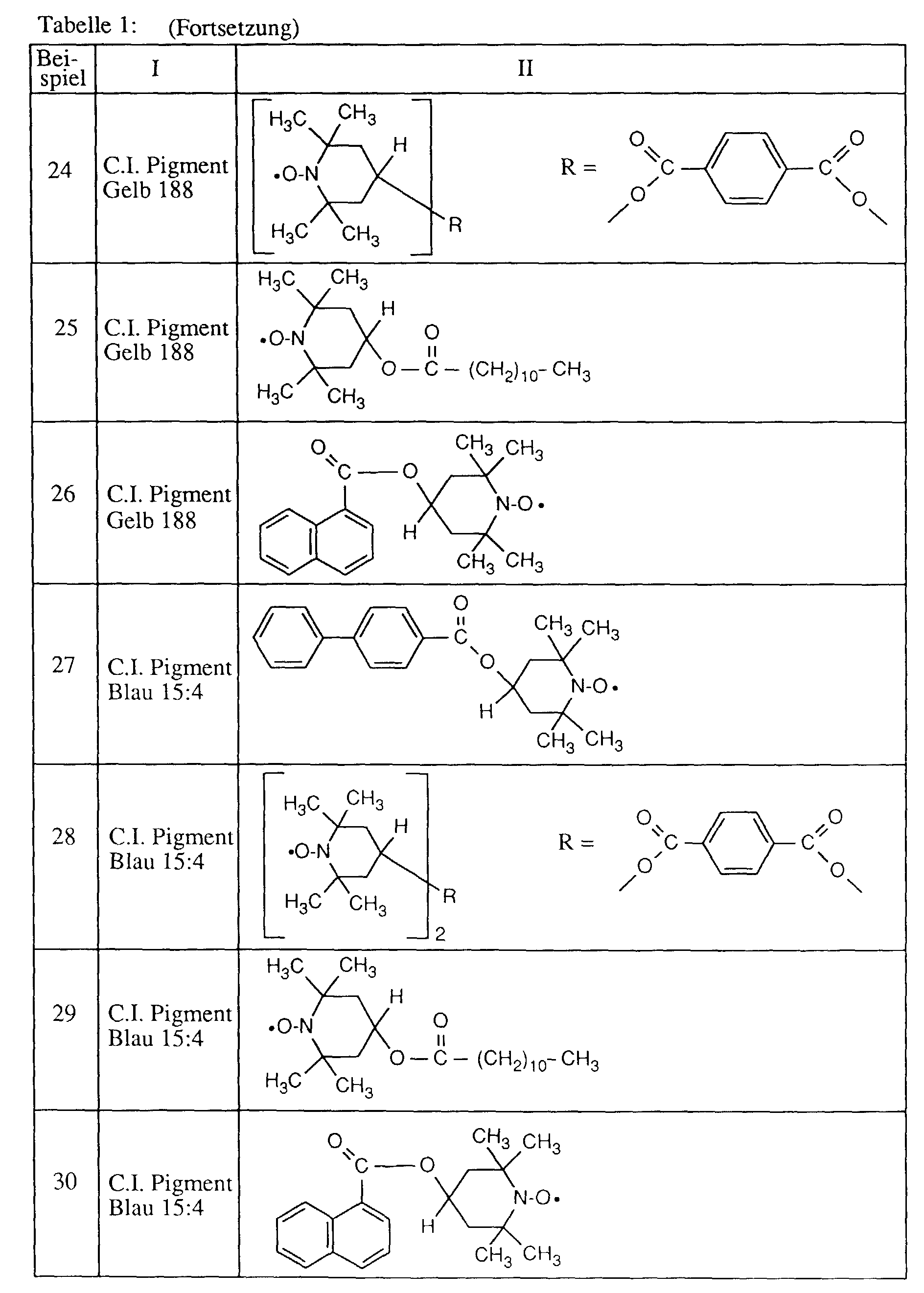

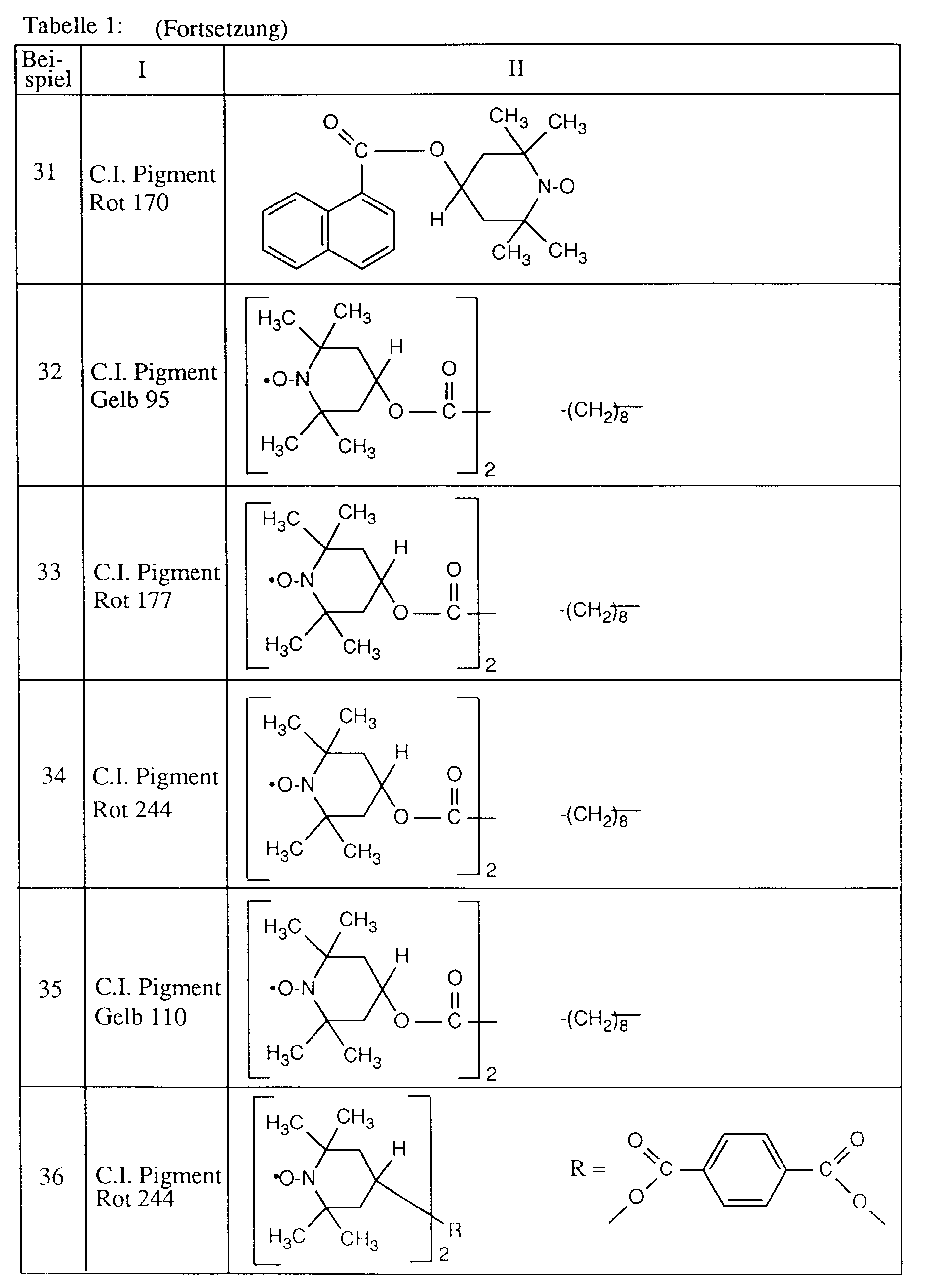

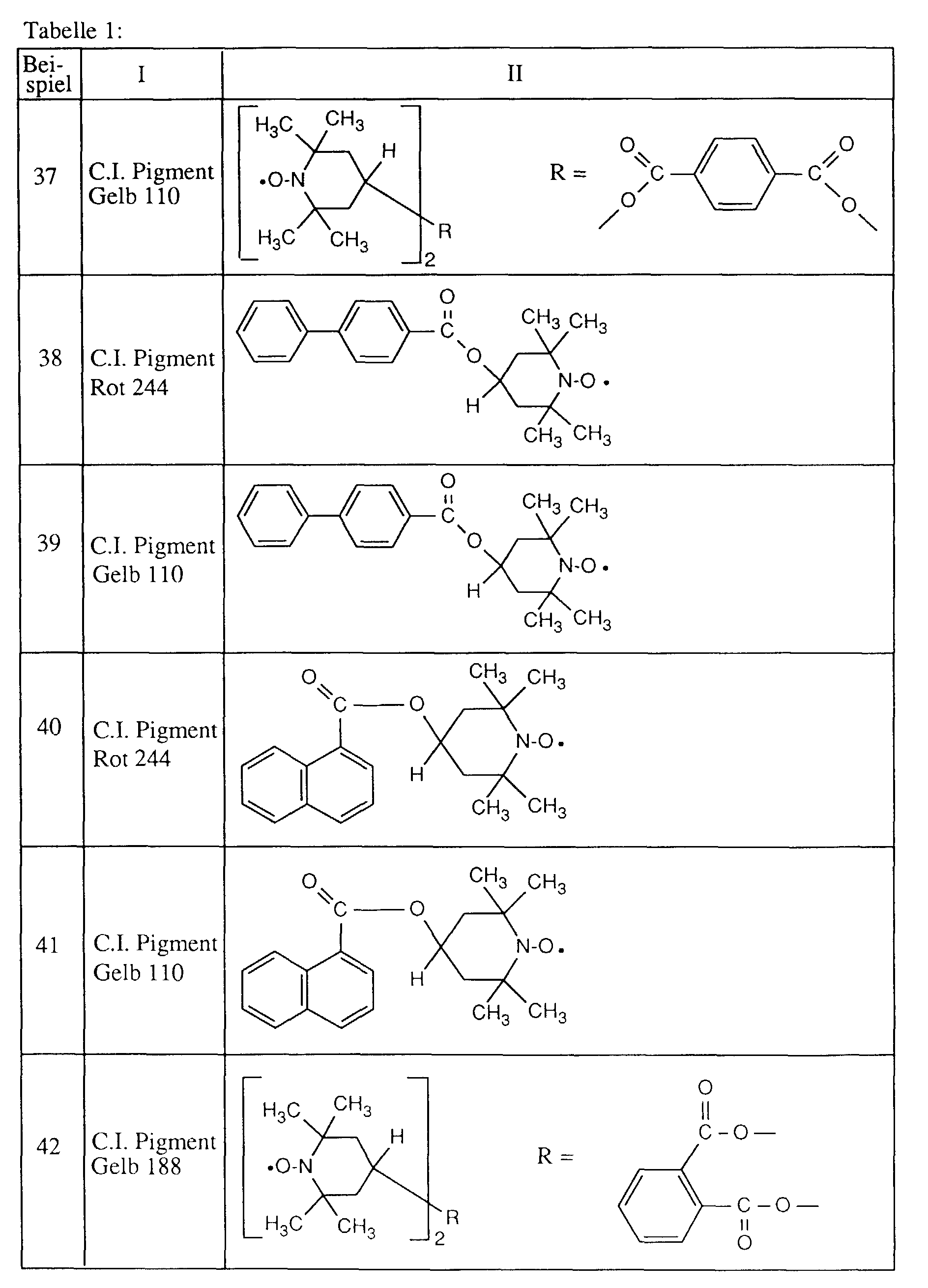

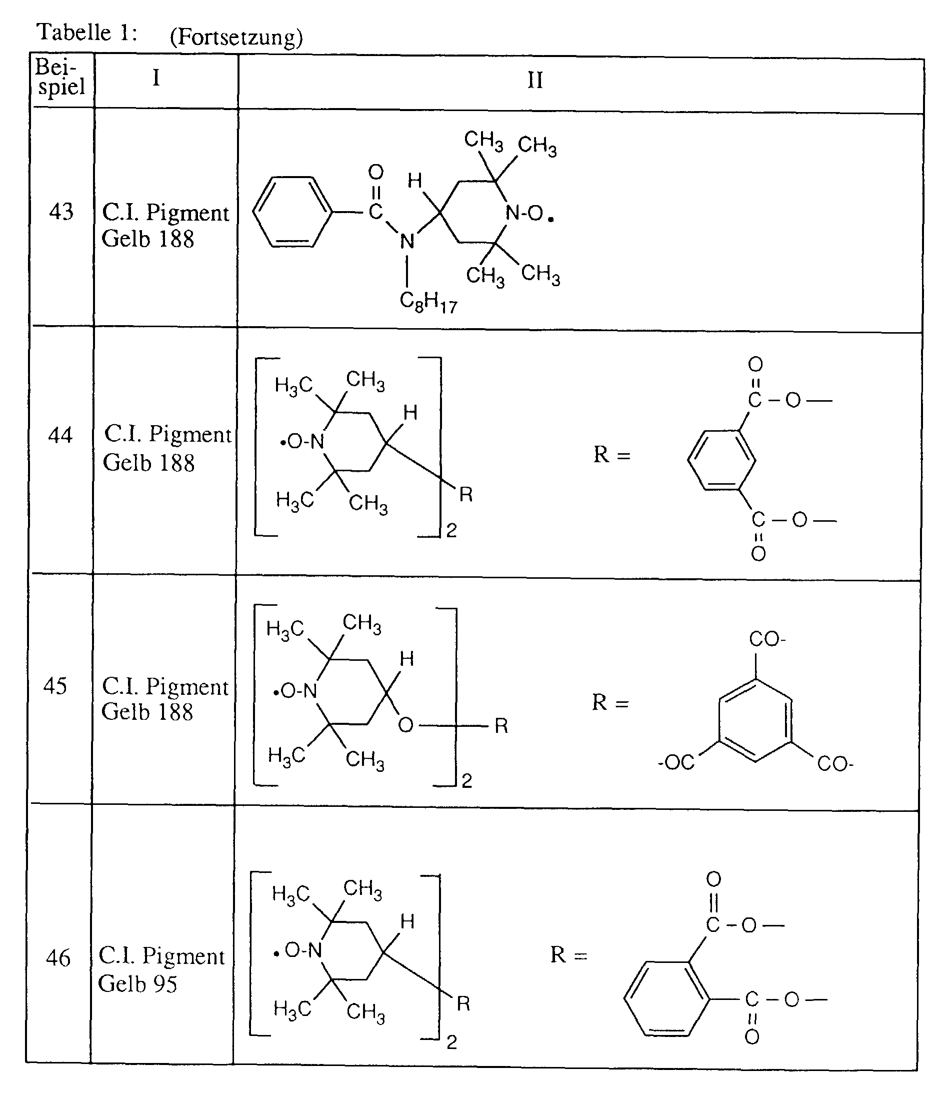

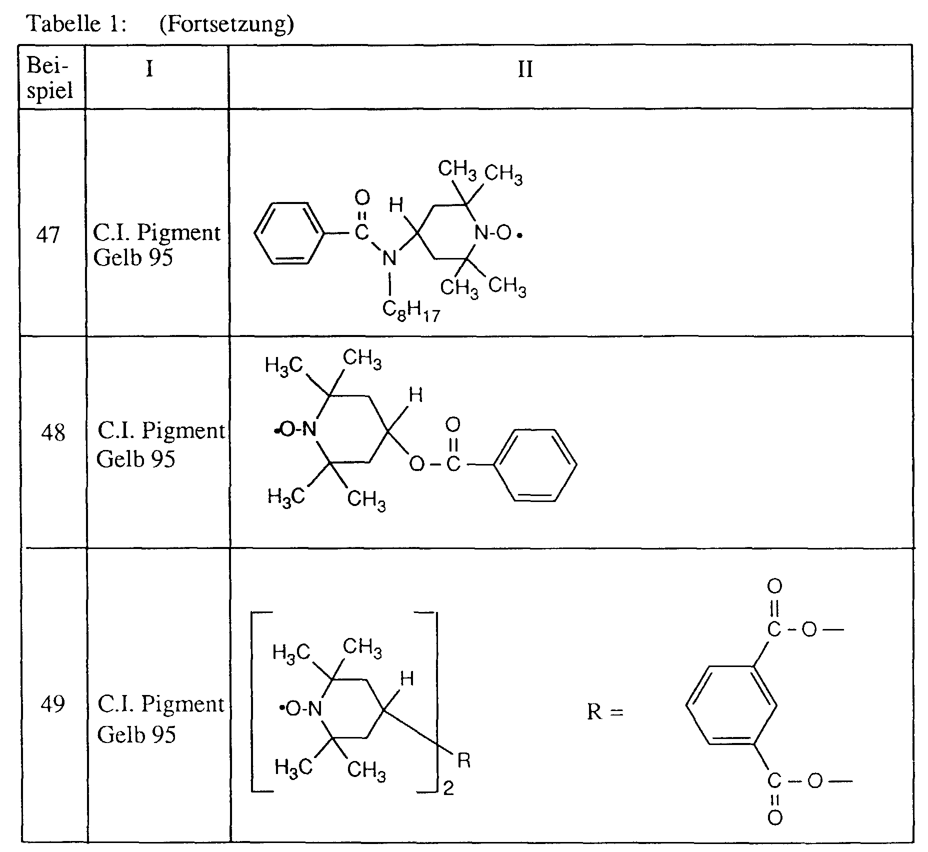

### Beispiele 50-52:

0,7 g C.I. Pigment Gelb 95 und 0,35 g einer der in der nachstehenden Tabelle 2 angegebenen Nitroxylverbindungen werden mit 700 g Polyethylen VESTOLEN A 6016® (Hüls) und 1,4 g Calciumcarbonat MILICARB® trocken vermischt. Die Mischung wird anschliessend in einem Einschneckenextruder zweimal bei 200°C extrudiert. Das so erhaltene Granulat wird auf einer Spritzgussmaschine bei 200°C zu Plättchen verarbeitet. Die Wetterbeständigkeit wird durch Bewitterung der Plättchen, wie für die Lackausfärbungen in Beispiel 1 beschrieben, bestimmt. Bei allen Beispielen kann eine bessere Wetterbeständigkeit als bei entsprechend ohne Nitroxylverbindungen hergestellten Kontroll-Plättchen festgestellt werden.

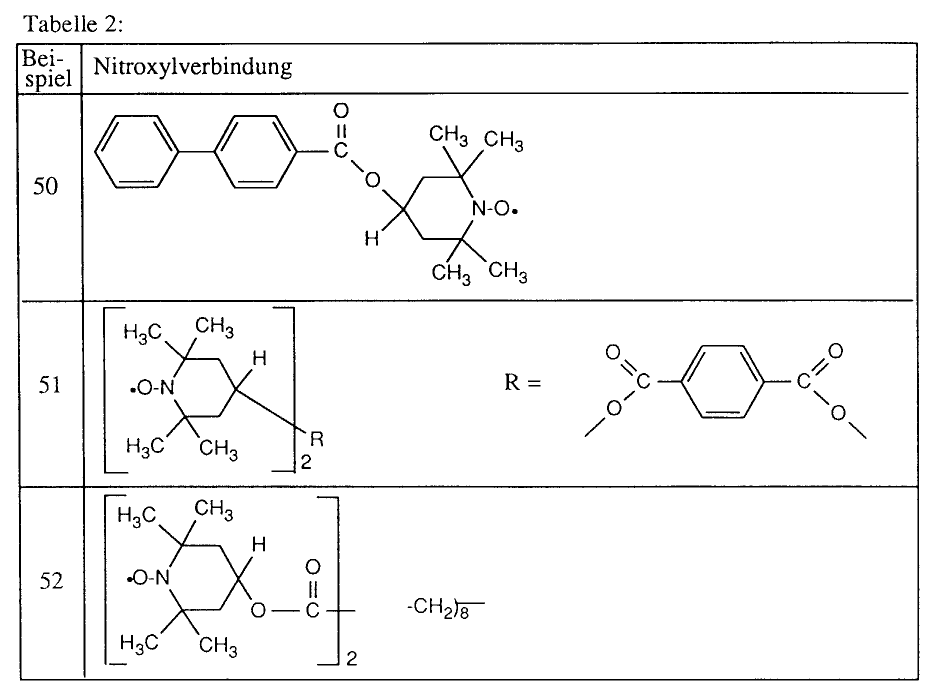

### Beispiele 53-55:

0,5 g C.I. Pigment Gelb 95, 0,1 g einer der in der nachstehenden Tabelle 3 angegebenen Nitroxylverbindungen und 16,2 g einer Nitrocellulosedruckfarbe bestehend aus 11 g Nitrocellulose A 250, 9 g DOWANOL PM® (Dow Chem.), 20 g Essigsäureethylester und 60 g Ethanol werden nach üblichen Methoden vermischt. Die erhaltene Druckfarbe wird auf Papier ausgezogen. Die Wetterbeständigkeit wird durch Belichtung der Ausfärbungen gemäss Fadeometer-Test während 500 Stunden bestimmt. Bei allen Beispielen kann eine bessere Wetterbeständigkeit als bei entsprechend ohne Nitroxylverbindungen hergestellten Kontroll-Ausfärbungen festgestellt werden.

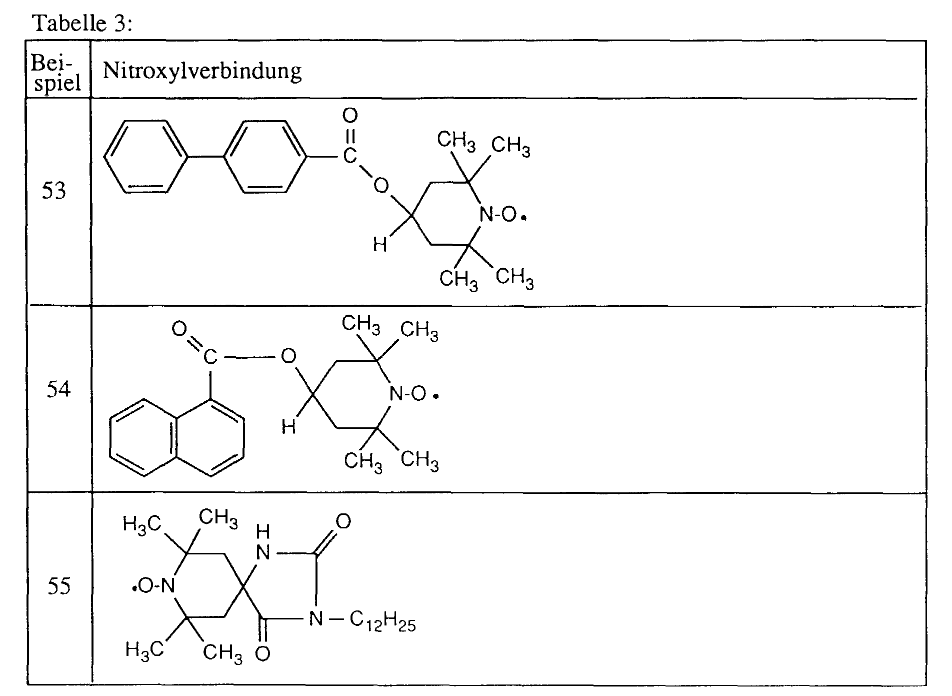

### Beispiele 56-58:

Die Beispiele 53-55 werden wiederholt mit der einzigen Ausnahme, dass anstelle von C.I. Pigment Gelb 95 die gleiche Gewichtsmenge C.I. Pigment Gelb 188 verwendet wird. Auch bei diesen Beispielen kann eine bessere Lichtbeständigkeit als bei entsprechenden Kontroll-Ausfärbungen ohne Nitroxylverbindung festgestellt werden.

Die Klassenzugehörigkeit der in den Beispielen 3-58 verwendeten Pigmente ist in der nachfolgenden Tabelle 4 festgehalten.

**Tabelle 4:**

| C.I. Bezeichnung | Pigmentklasse |
|---|---|
| C.I. Pigment Gelb 17 | Bisazopigment |
| C.I. Pigment Gelb 62 | Verlaktes Monoazopigment |
| C.I. Pigment Gelb 95 | Bisazopigment |
| C.I. Pigment Gelb 110 | Isoindolinonpigment |
| C.I. Pigment Gelb 188 | Bisazopigment |
| C.I. Pigment Orange 34 | Bisazopigment |
| C.I. Pigment Rot 170 | Monoazopigment |
| C.I. Pigment Rot 177 | Anthrachinonpigment |
| C.I. Pigment Rot 244 | Diaminoanthrachinonylpigment |
| C.I. Pigment Blau 15:4 | Kupferphthalocyaninpigment |

## Patentansprüche

1. Lichtstabilisierte Pigmentzusammensetzungen bestehend aus
a) mindestens einem organischen Pigment ausgewählt aus der Gruppe bestehend aus Azopigmente, Chinacridone, Phthalocyanine, Indanthrone, Flavanthrone, Pyranthrone, Anthrachinone, Perylene, Dioxazine, Perinone, Thioindigo, Isoindoline, Isoindolinone und Metallkomplexe und
b) 1 bis 100 Gew.%, bezogen auf das Pigment, einer Nitroxylverbindung der Formel 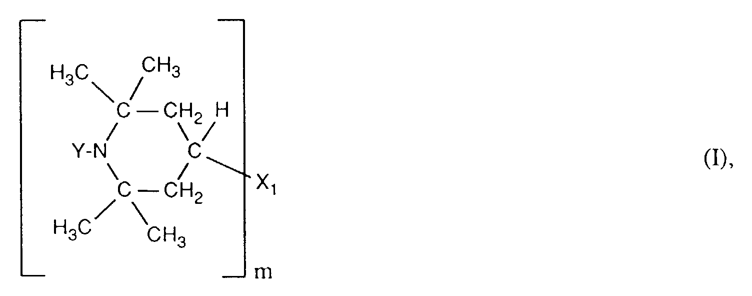 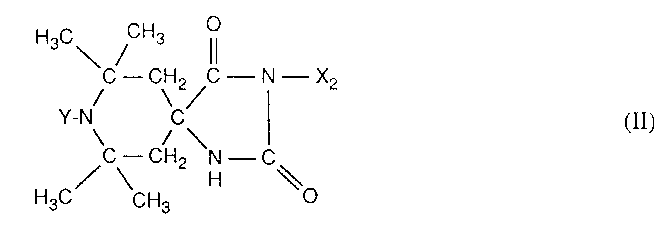 oder 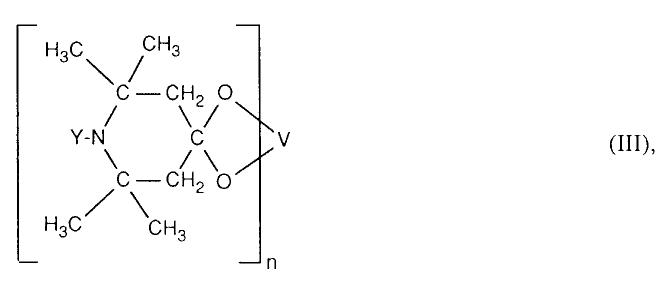 worin
m 1, 2 oder 3 ist,
X₁, bei m = 1, C₁-C₁₈-Alkyl, -OCO-R₇, -NR₆-COR₇ oder 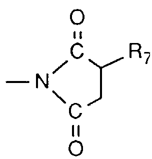 ist, worin R₆ Wasserstoff oder C₁-C₁₈-Alkyl ist und R₇ C₁-C₁₈-Alkyl oder unsubstituiertes oder durch C₁-C₄-Alkyl, C₁-C₄-Alkoxy, Phenyl oder Halogen substituiertes Phenyl oder Naphthyl bedeutet,
bei m = 2, eine Gruppe -OCO-(CH₂)ₚ-OCO- oder -NR₆CO-(CH₂)ₚ-CONR₁₅-, worin p eine Zahl zwischen 2 und 8 ist, 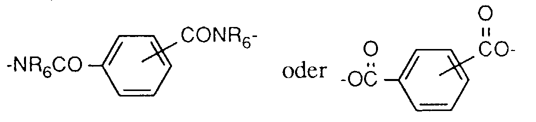 ist und
bei m = 3, eine Gruppe 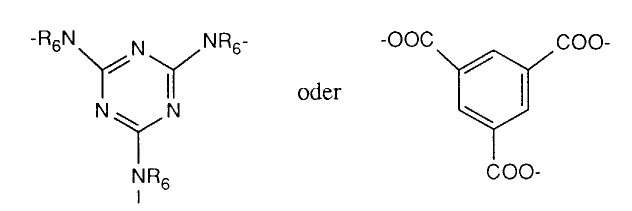 bedeutet,
X₂ C₁-C₁₈-Alkyl ist,
n die Zahl 2,
V die Gruppe (-CH₂)₂C(CH₂-)₂ oder 〉O〈 bedeutet und
Y O• ist,
oder eines Säureadditionssalzes davon.

2. Pigmentzusammensetzungen gemäss Anspruch 1, dadurch gekennzeichnet, dass ein Pigment der Isoindolin-, Isoindolinon-, Metallkomplex-, Monoazo- und insbesondere der Bisazo-, Chinacridon-, Phthalocyanin-, Anthrachinon- und Perylenreihe verwendet wird.

3. Pigmentzusammensetzungen gemäss Anspruch 1, dadurch gekennzeichnet, dass das Pigment in feiner Form mit einer durchschnittlichen Partikelgrösse von 0,005 bis 0,1 µm verwendet wird.

4. Pigmentzusammensetzungen gemäss Anspruch 1, dadurch gekennzeichnet, dass die Nitroxylverbindungen in einer Menge von 5-100 Gew.%, bezogen auf das Pigment, eingesetzt wird.

5. Pigmentzusammensetzungen gemäss Anspruch 1, dadurch gekennzeichnet, dass ein organisches oder anorganisches Salz der Nitroxylverbindung verwendet wird.

6. Pigmetzusammensetzungen gemäss Anspruch 1, dadurch gekennzeichnet, dass eine Nitroxylverbindung der Formel I oder II, worin m 1 ist, X₁ Benzoyloxy oder Naphthoyloxy bedeutet und X₂ C₈-C₁₈-Alkyl ist, verwendet wird.

7. Verfahren zur Licht- und Wetterstabilisierung von Pigmenten, ausgewählt aus der Gruppe bestehend aus Azopigmente, Chinacridone, Phthalocyanine, Indanthrone, Flavanthrone, Pyranthrone, Anthrachinone, Perylene, Dioxazine, Perinone, Thioindigo, Isoindoline, Isoindolinone und Metallkomplexe, durch Vermischung oder Beschichtung der Pigmentpartikel mit 1 bis 100 Gew.%, bezogen auf das Pigment, einer Nitroxylverbindung der Formel 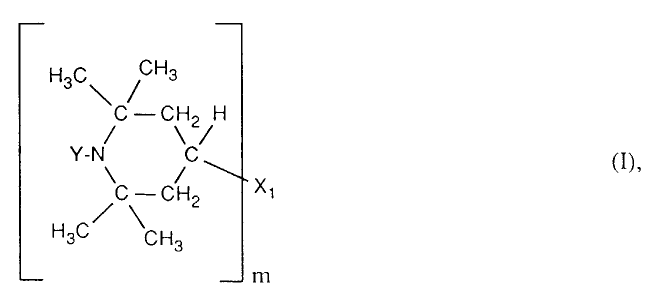 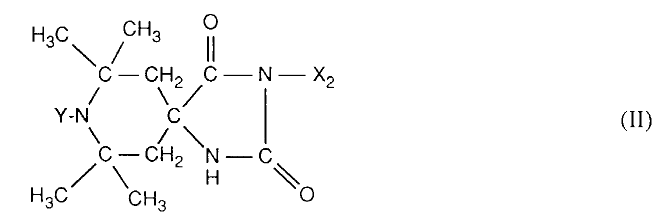 oder 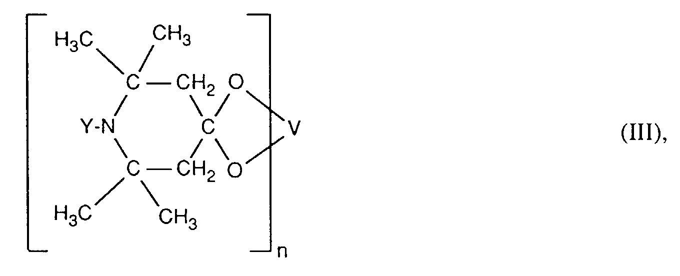 worin
m 1, 2 oder 3 ist,
X₁, bei m = 1, C₁-C₁₈-Alkyl, -OCO-R₇, -NR₆-COR₇ oder 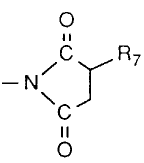 ist, worin R₆ Wasserstoff oder C₁-C₁₈-Alkyl ist und R₇ C₁-C₁₈-Alkyl oder unsubstituiertes oder durch C₁-C₄-Alkyl, C₁-C₄-Alkoxy, Phenyl oder Halogen substituiertes Phenyl oder Naphthyl bedeutet,
bei m = 2, eine Gruppe -OCO-(CH₂)ₚ-OCO- oder -NR₆CO-(CH₂)ₚ-CONR₁₅-, worin p eine Zahl zwischen 2 und 8 ist, 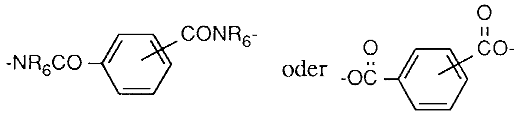 ist und
bei m = 3, eine Gruppe 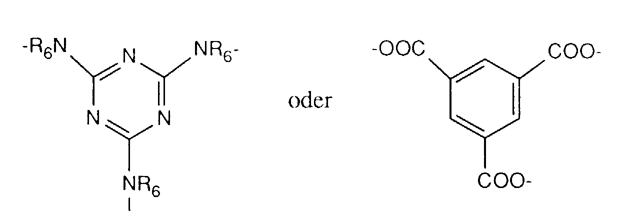 bedeutet,
X₂ C₁-C₁₈-Alkyl ist,
n die Zahl 2,
V die Gruppe (-CH₂)₂C(CH₂-)₂ oder 〉O〈 bedeutet und
Y O• ist oder eines Säureadditionssalzes davon.

8. Pigmentiertes Material, bestehend aus hochmolekuklarem organischen Material, einer Pigmentzusammensetzung gemäss Anspruch 1 und ggf. weiteren Zusatzstoffen, ausgewählt aus Füllmitteln, anderen Pigmenten, Siccativen, Weichmachern und Lösungsmitteln oder Lösungsmittelgemischen.

9. Pigmentiertes Material gemäss Anspruch 8, dadurch gekennzeichnet, dass es sich um einen Lack handelt.

10. Pigmentiertes Material gemäss Anspruch 9, dadurch gekennzeichnet, dass es sich um einen Automobillack handelt.

11. Verwendung von lichtstabilisierten Pigmentzusammensetzungen gemäss Anspruch 1 zur Pigmentierung von hochmolekularem organischem Material.

## Claims

1. A light-stabilised pigment composition consisting of
a) at least one organic pigment chosen from the group consisting of azo pigments, quinacridones, phthalocyanines, indanthrones, flavanthrones, pyranthrones, anthraquinones, perylenes, dioxazines, perinones, thioindigo, isoindolines, isoindolinones and metal complexes and
b) 1 to 100% by weight, based on the pigment, of a nitroxyl compound of the formula 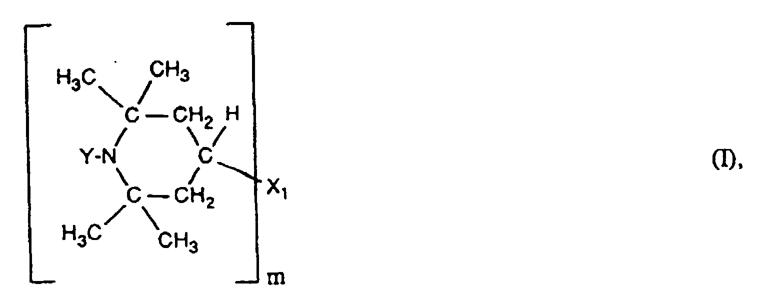 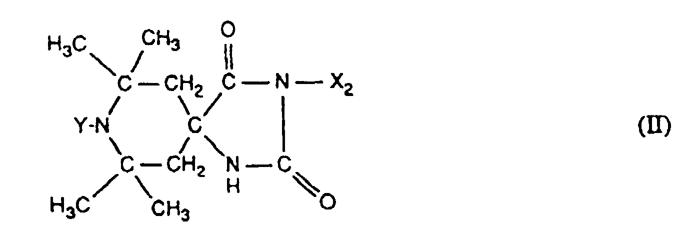 or 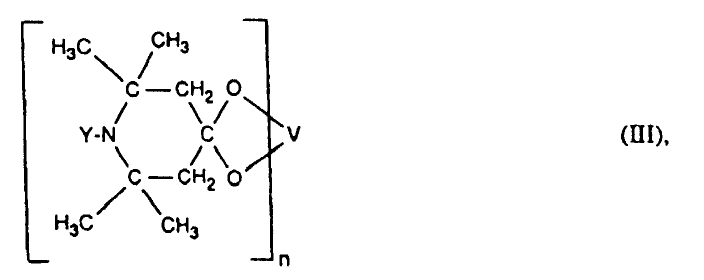 in which
m is 1, 2 or 3,
X₁, if m = 1, is C₁-C₁₈alkyl, -OCO-R₇, -NR₆-COR₇ or 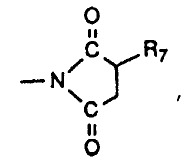 in which R₆ is hydrogen or C₁-C₁₈alkyl and R₇ is C₁-C₁₈alkyl or phenyl or naphthyl which is unsubstituted or substituted by C₁-C₄alkyl, C₁-C₄alkoxy, phenyl or halogen, and, if m = 2, is a group -OCO-(CH₂)ₚ-OCO- or -NR₆CO-(CH₂)ₚ-CONR₁₅-, in which p is a number between 2 and 8, 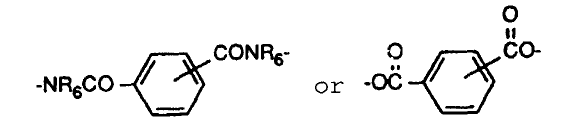 and,
if m = 3, is a group 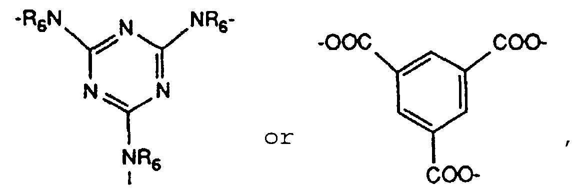
X₂ is C₁-C₁₈alkyl,
n is the number 2,
V is the group (-CH₂)₂C(CH₂-)₂ or 〉O〈 and
Y is O•,
or of an acid addition salt thereof.

2. A pigment composition according to claim 1, wherein a pigment of the isoindoline, isoindolinone, metal complex, monoazo and, in particular, of the bisazo, quinacridone, phthalocyanine, anthraquinone and perylene series is used.

3. A pigment composition according to claim 1, wherein the pigment is used in a fine form having an average particle size of 0.005 to 0.1 µm.

4. A pigment composition according to claim 1, wherein the nitroxyl compound is employed in an amount of 5-100% by weight, based on the pigment.

5. A pigment composition according to claim 1, wherein an organic or inorganic salt of the nitroxyl compound is used.

6. A pigment composition according to claim 1, wherein a nitroxyl compound of the formula I or II in which m is 1, X₁ is benzoyloxy or naphthoyloxy and X₂ is C₈-C₁₈alkyl is used.

7. A process for light- and weather-stabilisation of pigments chosen from the group comprising azo pigments, quinacridones, phthalocyanines, indanthrones, flavanthrones, pyranthrones, anthraquinones, perylenes, dioxazines, perinones, thioindigo, isoindolines, isoindolinones and metal complexes by mixing or coating the pigment particles with 1 to 100% by weight, based on the pigment, of a nitroxyl compound of the formula 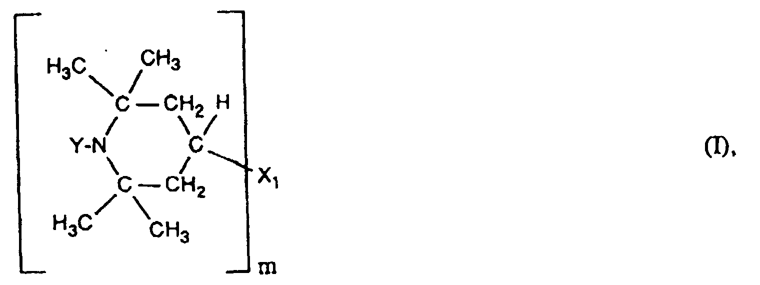 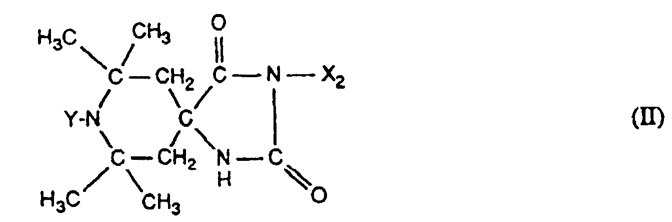 or 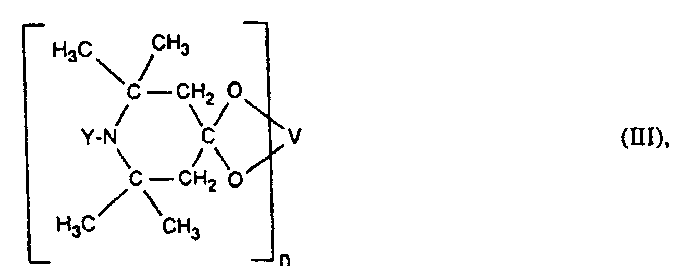 in which
m is 1, 2 or 3,
X₁, if m = 1, is C₁-C₁₈alkyl, -OCO-R₇, -NR₆-COR₇ or 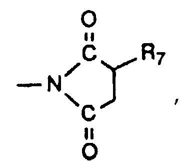 in which R₆ is hydrogen or C₁-C₁₈alkyl and R₇ is C₁-C₁₈alkyl or phenyl or naphthyl which is unsubstituted or substituted by C₁-C₄alkyl, C₁-C₄alkoxy, phenyl or halogen, and, if m = 2, is a group -OCO-(CH₂)ₚ-OCO- or -NR₆CO-(CH₂)ₚ-CONR₁₅-, in which p is a number between 2 and 8, 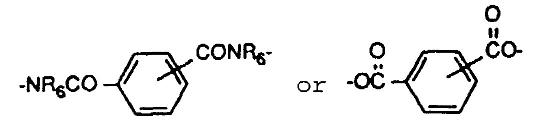 and,
if m = 3, is a group 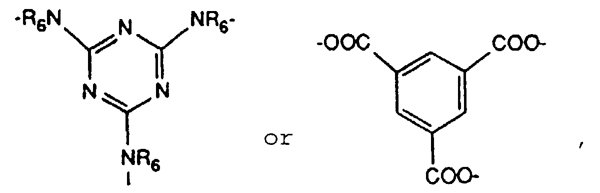
X₂ is C₁-C₁₈alkyl,
n is the number 2,
V is the group (-CH₂)₂C(CH₂-)₂ or 〉O〈 and
Y is O•, or of an acid addition salt thereof.

8. A pigmented material consisting of a high molecular weight organic material, a pigment composition according to claim 1 and if appropriate further additives selected from fillers, other pigments, siccatives, plasticisers and solvents or solvent mixtures.

9. A pigmented material according to claim 8, which is a varnish.

10. A pigmented material according to claim 9, which is an automobile finish.

11. The use of a light-stabilised pigment composition according to claim 1 for pigmenting a high molecular weight organic material.

## Revendications

1. Compositions pigmentaires stabilisées à la lumière comportant
a) au moins un pigment organique pris dans le groupe constitué par des pigments azoïques, des quinacridones, des phtalocyanines, des indanthrones, des flavanthrones, des pyranthrones, des anthraquinones, des pérylènes, des dioxazines, des périnones, le thioindigo, des isondolines, des isoindolinones et des complexes métalliques et
b) de 1 à 100% en masse, par rapport au pigment, d'un composé de nitroxyle de formule 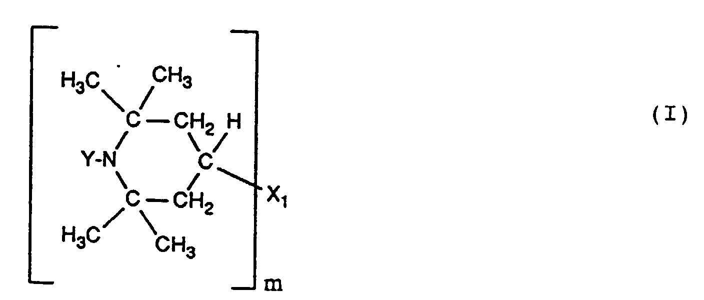 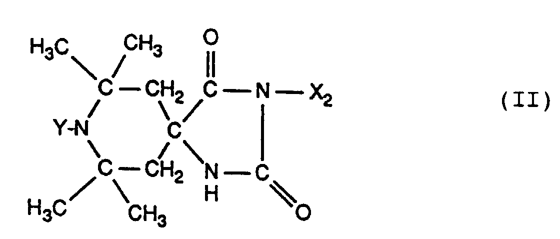 ou 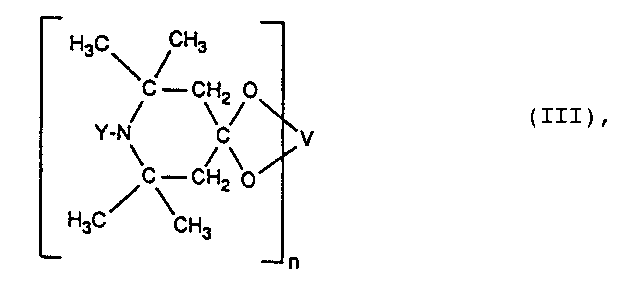 où
m vaut 1, 2 ou 3,
X₁ pour m = 1, représente des groupes alkyle en C₁-C₁₈, -OCO-R₇, NR₆-COR₇ ou 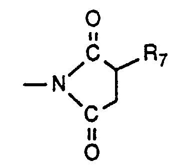 où R₆ représente un atome d'hydrogène ou des groupes alkyle en C₁-C₁₈ et R₇ représente des groupes alkyle en C₁-C₁₈ ou phényle ou naphtyle non substitué ou substitué par des substituants alkyle en C₁-C₄, alkoxy en C₁-C₄, phényle ou halogène, pour m = 2, représente un groupe -OCO-(CH₂)ₚ-OCO- ou -NR₆CO-(CH₂)ₚ-CONR₁₅-, où p est un nombre compris entre 1 et 8, 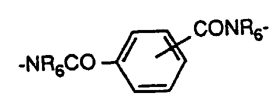 ou 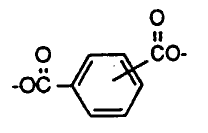 pour m = 3, représente un groupe 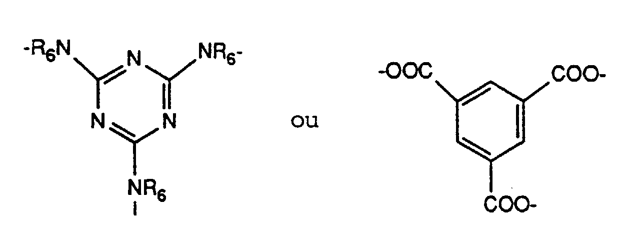
X₂ représente un groupe alkyle en C₁-C₁₈,
n vaut 2,
V représente le groupe -(CH₂)₂C(CH₂-)₂ ou 〉O〈 et
Y représente O•,
ou un de sels d'addition d'acide.

2. Compositions pigmentaires selon la revendication 1, caractérisées en ce que l'on emploie un pigment de la famille de l'isoindoline, de l'isoindolinone, des complexes métalliques, des pigments monoazoïques et notamment des bisazoïques, de la quinacridone, de la phtalocyanine, de l'anthraquinone et du pérylène.

3. Compositions pigmentaires selon la revendication 1, caractérisées en ce que l'on emploie le pigment sous forme finement divisée avec une granulométrie moyenne de 0,005 à 0,1 µm.

4. Compositions pigmentaires selon la revendication 1, caractérisées en ce que l'on emploie le composé de nitroxyle en une quantité de 5 à 100% en masse, par rapport au pigment.

5. Compositions pigmentaires selon la revendication 1, caractérisées en ce que l'on emploie un sel organique ou inorganique du composé de nitroxyle.

6. Compositions pigmentaires selon la revendication 1, caractérisées en ce que l'on emploie un composé de nitroxyle de formule I ou II où m vaut 1, X₁ représente des groupes benzyloxy ou naphtyloxy et X₂ représente alkyle en C₈-C₁₈.

7. Procédé pour la stabilisation contre la lumière et les intempéries des pigments pris dans le groupe comportant des pigments azoïques, des quinacridones, des phtalocyanines, des indanthrones, des flavanthrones, des pyranthrones, des anthraquinones, des pérylènes, des dioxazines, des périnones, le thioindigo, des isondolines, des isoindolinones et des complexes métalliques, par mélange ou revêtement des particules de pigment par 1 à 100% en masse, par rapport au pigment, d'un composé de nitroxyle de formule 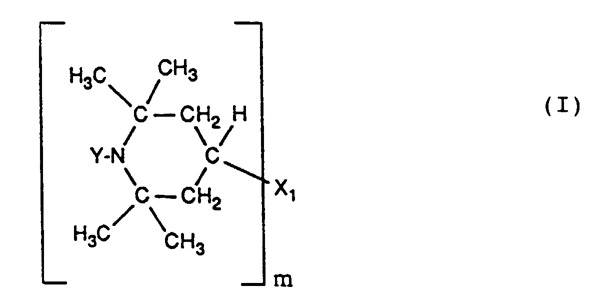 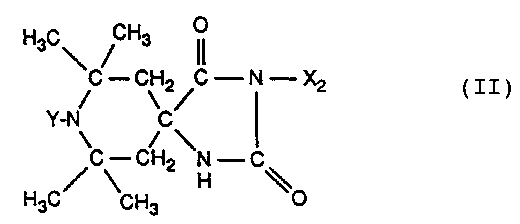 ou 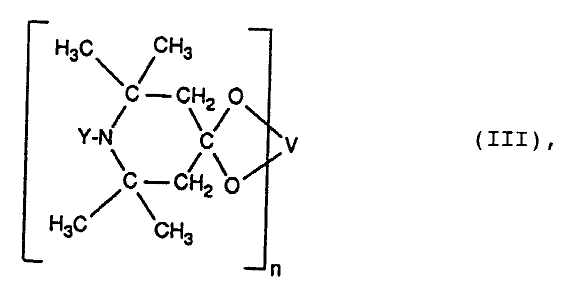 où
m vaut 1, 2 ou 3,
X₁ pour m = 1, représente des groupes alkyle en C₁-C₁₈, -OCO-R₇, NR₆-COR₇ ou 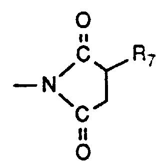 où R₆ représente un atome d'hydrogène ou des groupes alkyle en C₁-C₁₈ et R₇ représente des groupes alkyle en C₁-C₁₈ ou phényle ou naphtyle non substitué ou substitué par des substituants alkyle en C₁-C₄, alkoxy en C₁-C₄, phényle ou halogène,
pour m = 2, représente un groupe -OCO-(CH₂)ₚ-OCO-ou -NR₆CO-(CH₂)ₚ-CONR₁₅-, où p est un nombre compris entre 1 et 8, 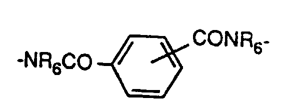 ou 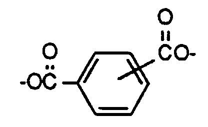 pour m = 3, représente un groupe 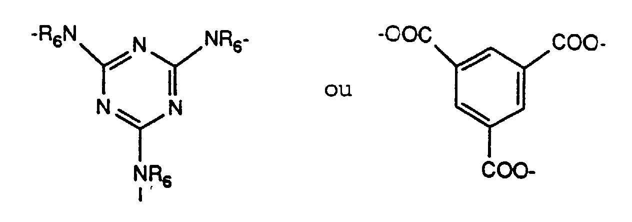
X₂ représente un groupe alkyle en C₁-C₁₈,
n vaut 2,
V représente le groupe -(CH₂)₂C(CH₂-)₂ ou 〉O〈 et
Y représente O•, ou un de sels d'addition d'acide.

8. Matière pigmentée constituée par une matière organique de haut poids moléculaire, d'une composition pigmentaire selon la revendication 1 et éventuellement par d'autres matières d'addition, prises parmi les charges, d'autres pigments, les siccatifs, les plastifiants et les solvants ou les mélanges de solvants.

9. Matière pigmentée selon la revendication 8, caractérisée en ce qu'il s'agit d'un vernis.

10. Matière pigmentée selon la revendication 9, caractérisée en ce qu'il s'agit d'un vernis automobile.

11. Emploie de compositions de pigment stabilisées selon la revendication 1 pour la pigmentation de matière organique de haut poids moléculaire.
